# EUROPÄISCHE PATENTSCHRIFT

(11) **EP 3 560 735 B1**
(45) Veröffentlichungstag und Bekanntmachung des Hinweises auf die Patenterteilung: **04.11.2020**
(21) Anmeldenummer: 19155447.6
(22) Anmeldetag: 05.02.2019
(51) Int. Cl.: B60C 11/24, B60C 11/04, B60C 11/03, B60C 11/13

(54) **NUTZFAHRZEUGREIFEN**
COMMERCIAL VEHICLE TYRES
PNEU DE VÉHICULE UTILITAIRE

(30) Priorität: 24.04.2018 DE 102018206262
(43) Veröffentlichungstag der Anmeldung: 30.10.2019
(73) Patentinhaber: Continental Reifen Deutschland GmbH, 30165 Hannover (DE)
(72) Erfinder: Filova, Dagmar, 95701 Banovce nad Bebravou (SK); von Zobeltitz, Carsten, 30926 Seelze (DE); Neuber, Cord-Christian, 31515 Wunstorf (DE); Dettmer, Fabian, 38106 Braunschweig (DE)
(74) Vertreter: Finger, Karsten

(56) Entgegenhaltungen:
- EP-A1- 0 816 131
- WO-A1-2016/003433
- JP-A- H02 114 005
- JP-A- H11 301 211
- JP-A- 2005 067 407
- US-A1- 2007 056 665
- US-A1- 2009 194 213
- US-A1- 2012 168 048

## Beschreibung

Die Erfindung betrifft einen Nutzfahrzeugreifen mit einem Laufstreifen mit je einer schulterseitigen Umfangsrille in jeder Schulter, wobei jede schulterseitige Umfangsrille eine laufstreifeninnenseitige Rillenflanke und eine laufstreifenaußenseitige Rillenflanke aufweist und wobei in jeder schulterseitigen Umfangsrille ein sich über den Laufstreifenumfang erstreckend, freistehender er Steg ausgebildet ist, welcher die schulterseitige Umfangsrille in einen laufstreifenaußenseitigen Rillenabschnitt und einen laufstreifeninnenseitigen Rillenabschnitt teilt, wobei der laufstreifenaußenseitige Rillenabschnitt breiter ist als der laufstreifeninnenseitige Rillenabschnitt.

Ein Nutzfahrzeugreifen der eingangs genannten Art ist beispielsweise aus der WO 2012/163607 A1 bekannt. Der sich jeweils in jeder schulterseitigen Umfangsrille über den Laufstreifenumfang erstreckende, freistehende Steg teilt die schulterseitige Umfangsrille asymmetrisch, sodass ein breiterer laufstreifenaußenseitiger Rillenabschnitt und ein schmälerer laufstreifeninnenseitiger Rillenabschnitt gebildet werden. Eine solche Teilung der schulterseitigen Umfangsrillen wirkt sich vorteilhaft auf die Rissbeständigkeit der Rillenflanken und des Rillengrundes der Umfangsrillen bzw. der beiden Rillenabschnitte aus.

Es ist üblich, in Laufstreifen von Nutzfahrzeugreifen in den Umfangsrillen gut sichtbare und als Abriebindikatoren dienende Erhebungen, Vorsprünge oder dergleichen auszubilden. Die bekannten Abriebindikatoren begünstigen häufig das Entstehen von Rissen in den Umfangsrillen, da die in die Umfangsrillen eingeleiteten Spannungen im Bereich der Abriebindikatoren erhöht sind. Sind Risse im Bereich der Abriebindikatoren erst einmal entstanden, pflanzen sich diese häufig in den Umfangsrillen in Umfangs- und in Radialrichtung fort, sodass die Haltbarkeit des Laufstreifens leidet.

Insbesondere sind die schulterseitigen Umfangsrillen im Hinblick auf eine Rissbildung kritisch, da sie beim Fahren in erhöhtem Ausmaß mechanischem Stress sowie - insbesondere bedingt durch die in diesem Bereich radial innerhalb liegenden Gürtelkanten und die größere Laufstreifendicke - höherer Wärmeentwicklung ausgesetzt sind. Gleichzeitig sind jedoch genau die in schulterseitigen Umfangsrillen ausgebildeten Abriebindikatoren im Vergleich zu in mittleren Umfangsrillen ausgebildeten Abriebindikatoren, bei am Fahrzeug montiertem Nutzfahrzeugreifen besser sichtbar.

Der Erfindung liegt daher die Aufgabe zu Grunde, bei einem Nutzfahrzeugreifen der eingangs genannten Art in schulterseitigen Umfangsrillen Abriebindikatoren zu Verfügung zu stellen, welche keinen oder kaum einen Einfluss auf die Rissbeständigkeit im Bereich der schulterseitigen Umfangsrillen haben.

Gelöst wird die gestellte Aufgabe erfindungsgemäß dadurch, dass der in jeder schulterseitigen Umfangsrille ausgebildete, freistehende Steg mit einer Anzahl von, insbesondere gleichmäßig über den Umfang verteilten, den Steg in axialer Richtung durchsetzenden Aussparungen versehen ist, wobei jede Aussparung in radialer Richtung durch einen Boden begrenzt ist, welcher sich in der Oberfläche einer Erhebung fortsetzt, die neben der Aussparung im laufstreifeninnenseitigen Rillenabschnitt ausgebildet ist, wobei die Erhebung in Verbindung mit dem Boden der Aussparung einen Abriebindikator bildet.

Durch die den Steg durchquerenden, d.h. diesen partiell unterbrechenden Aussparungen werden die eingeleiteten Spannungen im Bereich des Abriebindikators besonders gleichmäßig über den Rillenquerschnitt verteilt, wodurch die erwünschte Rissbeständigkeit erhalten bleibt. Dabei lässt sich ein fortschreitender Laufstreifenabrieb gut über die seichter werdenden Aussparungen im Steg und über die Erhebungen im Rillenabschnitt mitverfolgen, sodass durch die Erfindung ein sehr gut sichtbarerer Abriebindikator zur Verfügung gestellt ist.

Dokument WO 2016/003433 A offenbart einen "Laufstreifen umfassend: eine Länge, eine Dicke, die sich von einer äußeren, bodeneingreifenden Seite nach innen erstreckt, und eine Breite, die sich seitlich zwischen einem Paar gegenüberliegender lateraler Seiten erstreckt, wobei sich die Breite quer zu einer Richtung der Profildicke und einer Richtung der erstreckt Profillänge; einen Hohlraum, der sich um eine Tiefe bis zu einer Unterseite des Hohlraums in die Profildicke erstreckt, wobei der Hohlraum eine Länge und gegenüberliegende Seiten aufweist, die voneinander beabstandet sind, um eine Hohlraumbreite zu bilden; und einen Grat, der entlang der Unterseite des Hohlraums angeordnet ist und von der Unterseite um eine Grathöhe nach außen vorsteht, wobei der Grat auch eine Gratlänge aufweist, die sich zumindest im Wesentlichen kontinuierlich entlang der wesentlichen Länge des Hohlraums erstreckt" (vgl. Anspruch 1).

Gemäß einer bevorzugten Ausführungsvariante verläuft der Boden jeder Aussparung parallel zur Laufstreifenperipherie, wobei seitlich der Aussparung die Oberfläche der Erhebung niveaugleich mit dem Boden der Aussparung verläuft.

Gemäß einer weiteren bevorzugten Ausführungsvariante läuft die Erhebung, welche im laufstreifeninnenseitigen Rillenabschnitt ausgebildet ist, in Umfangsrichtung außerhalb der Aussparung bis auf die Tiefe des laufstreifeninnenseitigen Rillenabschnittes aus. Dadurch werden im Bereich des Abriebindikators eingeleitete Spannungen zusätzlich auch in Umfangsrichtung sehr gut über die Erhebung verteilt, sodass die Rissbeständigkeit weiter verbessert ist.

In diesem Zusammenhang ist es ferner von Vorteil, wenn die Erhebung, im in Umfangsrichtung ausgerichteten Längsschnitt betrachtet, beidseitig jeweils über eine an die Oberfläche der Erhebung knickfrei anschließende Übergangsrundung, einen insbesondere um 10° bis 25° zur radialen Richtung geneigten mittleren Abschnitt und eine knickfrei zum Rillengrund des laufstreifeninnenseitigen Rillenabschnittes verlaufende Übergangsrundung in der Tiefe des laufstreifeninnenseitigen Rillenabschnittes ausläuft. Derart gestaltete Erhebungen unterstützen beim Fahren auf nasser Fahrbahn eine zumindest weitgehend verwirbelungsfreie Wasserströmung im laufstreifeninnenseitigen Rillenabschnitt.

Die Rissbeständigkeit im Bereich der als Abriebindikator dienenden Erhebung ist zusätzlich verbessert, wenn zwischen der Oberfläche der Erhebung und der laufstreifeninnenseitigen Rillenflanke eine Übergangsrundung ausgebildet ist, welche, im Querschnitt betrachtet, entlang eines Radius von 0,5 mm bis 2,0 mm sowie knickfrei zum Boden der Aussparung und knickfrei zur laufstreifeninnenseitigen Rillenflanke und zum Steg verläuft.

Für eine gute Rissbeständigkeit ist es auch vorteilhaft, wenn die zwischen der Oberfläche der Erhebung und der laufstreifeninnenseitigen Rillenflanke ausgebildete Übergangsrundung über die gesamte Umfangserstreckung der Erhebung fortgeführt ist.

Gemäß einer bevorzugten Ausführungsvariante ist zwischen dem Boden der Aussparung und Stirnflächen, welche die Aussparung in Umfangsrichtung begrenzen, jeweils ebenfalls eine Übergangsrundung ausgebildet, welche, im Querschnitt betrachtet, entlang eines Radius von 0,5 mm bis 4,0 mm sowie knickfrei zum Boden der Aussparung und knickfrei zur jeweiligen Stirnfläche der Aussparung verläuft. Dadurch ist die Rissbeständigkeit an den in Umfangsrichtung liegenden Endbereichen der Aussparung verbessert.

Gemäß einer weiteren bevorzugten Ausführungsvariante befindet sich der Boden der Aussparung gegenüber der tiefsten Stelle des Rillengrundes der Rillenabschnitte in radialer Richtung in einer Höhe von 1,5 mm bis 5,0 mm. Das Bodenniveau wird dabei derart gewählt, dass es mit der für den jeweiligen Reifentyp vorgeschriebenen Mindestprofiltiefe korreliert.

Für eine gute Sichtbarkeit des Abriebindikators ist es von Vorteil, wenn die Aussparung in Umfangsrichtung an ihrer längsten Stelle eine Erstreckungslänge von 5,0 mm bis 25,0 mm aufweist.

In diesem Zusammenhang es ist ebenfalls von Vorteil, wenn die Erhebung, welche im laufstreifeninnenseitigen Rillenabschnitt ausgebildet ist, in Umfangsrichtung eine Erstreckungslänge von höchstens 60,0 mm aufweist.

Gemäß einer weiteren bevorzugten, für ein gute Rissbeständigkeit vorteilhaften Ausführungsvariante weist der laufstreifenaußenseitige Rillenabschnitt am radial äußeren Ende des Steges eine Breite von 30% bis 50% der Breite der schulterseitigen Umfangsrille auf, der laufstreifeninnenseitige Rillenabschnitt weist am radial äußeren Ende des Steges eine Breite von 10% bis 30% der Breite der schulterseitigen Umfangsrille auf, wobei die Breite der schulterseitigen Umfangsrille in axialer Richtung an der Laufstreifenperipherie ermittelt wird.

Es ist ferner bevorzugt, wenn der laufstreifenaußenseitige Rillenabschnitt und der laufstreifeninnenseitige Rillenabschnitt am radial äußeren Ende des Steges gemeinsam 40% bis 70% der am radial äußeren Ende des Steges in axialer Richtung gemessen Breite der schulterseitigen Umfangsrille einnehmen.

Bevorzugt beträgt ferner die Breite der schulterseitigen Umfangsrille, ermittelt in axialer Richtung an der Laufstreifenperipherie, 12,0 mm bis 20,0 mm. Eine solche Breite ermöglicht die Ausbildung eines entsprechend breiten und stabilen Steges in der Umfangsrille.

Gemäß einer weiteren bevorzugten Ausführungsvariante befinden sich Aussparungen, die im Steg in der einen schulterseitigen Umfangsrille ausgebildet sind, zu den Aussparungen, die im Steg in der anderen schulterseitigen Umfangsrille ausgebildet sind, in axialer Richtung in übereinstimmenden Positionen.

Bei einer weiteren vorteilhaften Ausgestaltung ist der Steg entlang seiner beim laufstreifenaußenseitigen Rillenabschnitt und/oder entlang seiner beim laufstreifeninnenseitigen Rillenabschnitt (1b) verlaufenden Kante zumindest abschnittsweise mit einer Fase versehen. Beim Fahren auf steinigem Untergrund wird durch eine solche Fase die Wahrscheinlichkeit des Verfangens von kleinen Steinen in den schulterseitigen Umfangsrillen deutlich verringert.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf eine Teilabwicklung eines Laufstreifens eines Nutzfahrzeugreifens mit einer Ausführungsvariante der Erfindung,
Fig. 2 ein Detail des Laufstreifens aus Fig. 1 in vergrößerter Schrägansicht,
Fig. 3 einen Schnitt entlang der Linie III-III der Fig. 1 und
Fig. 4 einen Schnitt entlang der Linie IV-IV der Fig. 1 bzw. der Fig. 3.

Erfindungsgemäß ausgeführte Fahrzeugluftreifen sind Nutzfahrzeugreifen in Radialbauart.

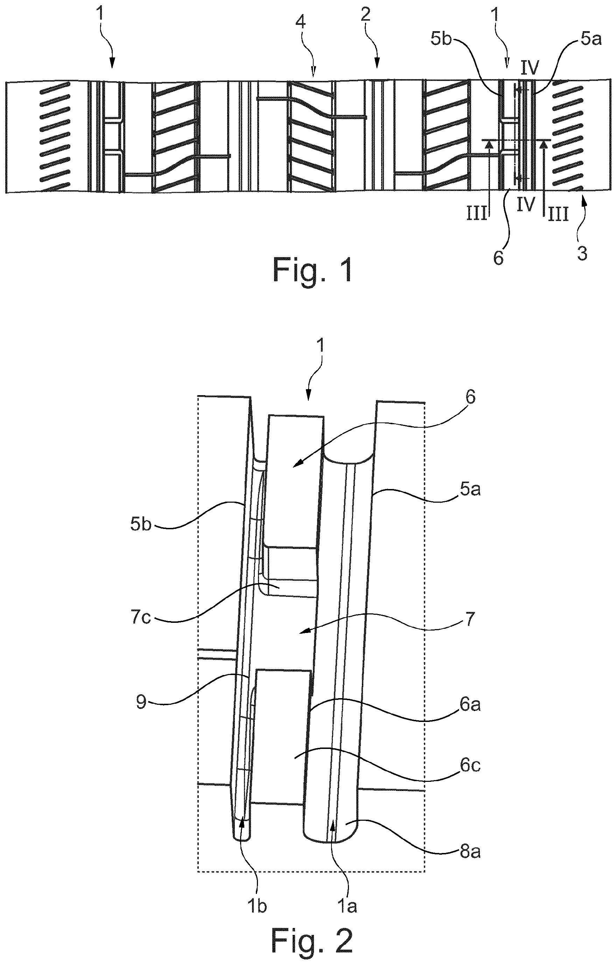

Der in Fig. 1 beispielhaft gezeigte Laufstreifen eines Nutzfahrzeugreifens ist mit zwei schulterseitigen Umfangsrillen 1 und zwei mittleren Umfangsrillen 2 versehen, wobei die Umfangsrillen 1, 2 in Draufsicht jeweils gerade verlaufen. Die schulterseitigen Umfangsrillen 1 trennen schulterseitige Profilrippen 3 von mittleren Profilrippen 4, die mittleren Umfangsrillen 2 trennen die mittleren Profilrippen 4 voneinander. Unter einer Profilrippe wird ein in Umfangsrichtung umlaufendes Profilpositiv verstanden, welches, wie in Fig. 1 gezeigt, mit Einschnitten und/oder Rillen, sacknutartig endenden Querrillen und dergleichen versehen sein kann sowie ferner auch blockartig strukturiert sein kann.

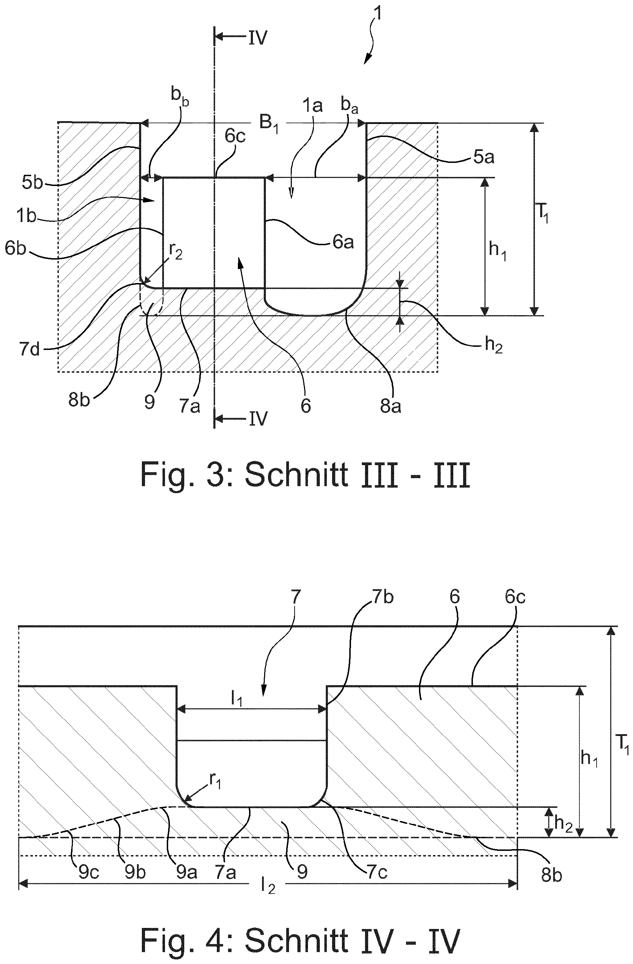

Die schulterseitigen Umfangsrillen 1 sind zu den schulterseitigen Profilrippen 3 jeweils durch eine laufstreifenaußenseitige Rillenflanke 5a und zur entsprechenden mittleren Profilrippe 4 jeweils durch eine laufstreifeninnenseitige Rillenflanke 5b begrenzt, wobei die Rillenflanken 5a, 5b beim gezeigten Ausführungsbeispiel, im Querschnitt betrachtet, in radialer Richtung verlaufen (Fig. 3). Alternativ können die Rillenflanken 5a, 5b, im Querschnitt betrachtet, zur radialen Richtung unter einem Winkel von insbesondere bis zu 10° verlaufen. Die schulterseitigen Umfangsrillen 1 weisen an der Laufstreifenperipherie, d.h. zwischen den radial äußeren Enden der Rillenflanken 5a, 5b, in axialer Richtung eine Breite Bi (Fig. 3) von vorzugsweise 12,0 mm bis 20,0 mm auf. In radialer Richtung weisen die schulterseitigen Umfangsrillen 1 an ihrer tiefsten Stelle eine Tiefe T₁ (Fig. 3) auf, welche der für den jeweiligen Nutzfahrzeugreifen vorgesehenen Profiltiefe entspricht und üblicherweise 12,0 mm bis 26,0 mm beträgt.

In jeder schulterseitigen Umfangsrille 1 ist ein freistehender, d.h. zu den Rillenflanken 5a, 5b beabstandeter, in Umfangsrichtung umlaufender, im Querschnitt im Wesentlichen rechteckiger, balkenartiger Steg 6 ausgebildet, welcher mit einer Anzahl von den Steg 6 in axialer Richtung durchsetzender Aussparungen 7 (Fig. 2) versehen ist. Beim gezeigten Ausführungsbeispiel sind die Aussparungen 7, welche den in der einen schulterseitigen Umfangsrille 1 befindlichen Steg 6 durchsetzen, - bezogen auf die Umfangsrichtung - zu den Aussparungen 7, welche den in der anderen schulterseitigen Umfangsrille 1 befindlichen Steg 6 durchsetzen, in übereinstimmenden Positionen ausgebildet. Bevorzugter Weise ist jeder Steg 6 über den Reifenumfang mit sechs insbesondere gleichmäßig verteilten Aussparungen 7 versehen.

Die weitere Ausgestaltung der schulterseitigen Umfangsrillen 1, der Stege 6 und der Aussparungen 7 wird nachfolgend anhand der in Fig. 1 rechten schulterseitigen Umfangsrille 1 genauer beschrieben.

Gemäß Fig. 1 und Fig. 2 ist der Steg 6 bezüglich der Mitte der schulterseitigen Umfangsrille 1 derart asymmetrisch in dieser positioniert, dass der Steg 6 in axialer Richtung zur laufstreifenaußenseitigen Rillenflanke 5a einen größeren Abstand als zur laufstreifeninnenseitigen Rillenflanke 5b aufweist. Wie insbesondere Fig. 2 zeigt, ist der Steg 6 axial seitlich durch eine der laufstreifenaußenseitigen Rillenflanke 5a gegenüberliegenden seitlichen Flanke 6a und eine der laufstreifeninnenseitigen Rillenflanke 5b gegenüberliegenden seitlichen Flanke 6b (Fig. 3) begrenzt, wobei die seitlichen Flanken 6a, 6b, im Querschnitt betrachtet, in radialer Richtung verlaufen (Fig. 3). Wie insbesondere Fig. 3 zeigt, ist der Steg 6 ferner in radialer Richtung durch eine zumindest im Wesentlichen parallel zur Laufstreifenperipherie ausgerichtete Deckfläche 6c begrenzt. In radialer Richtung weist der Steg 6 gegenüber dem tiefsten Punkt der Umfangsrille 1 in radialer Richtung eine konstante Höhe hi (Fig. 3) auf, welche um 2,0 mm bis 6,0 mm geringer ist als die Tiefe T₁ der Umfangsrille 1.

Der Steg 6 teilt die schulterseitigen Umfangsrille 1 in einen an die laufstreifenaußenseitige Rillenflanke 5a angrenzenden laufstreifenaußenseitigen Rillenabschnitt 1a und einen an die laufstreifeninnenseitige Rillenflanke 5b angrenzenden laufstreifeninnenseitigen Rillenabschnitt 1b, wobei die Rillenabschnitte 1a, 1b über die Aussparungen 7 miteinander verbunden sind (Fig. 2). Die Rillenabschnitte 1a, 1b weisen an ihren tiefsten Stellen die bereits erwähnte Tiefe T₁ der Umfangsrille 1 auf.

Wie Fig. 3 in Verbindung mit Fig. 2 zeigt, ist der laufstreifenaußenseitige Rillenabschnitt 1a durch die seitliche Flanke 6a des Steges 6, dem dieser gegenüberliegenden radial inneren Abschnitt der laufstreifenaußenseitigen Rillenflanke 5a sowie durch einen in der bereits erwähnte Tiefe T₁ verlaufenden gerundeten Rillengrund 8a begrenzt. Der Rillengrund 8a ist vorzugsweise gemäß dem Rillengrund der in der WO 2012/163607 A1 beschriebenen Umfangsrillen ausgeführt und setzt sich, im Querschnitt betrachtet, daher aus einem zur axialen Richtung geneigten, geradlinigen mittleren Abschnitt und seitlichen entlang von Radien gekrümmten Übergangsabschnitten zusammen. Ferner kann der Rillengrund 8a auch, wie in Fig. 3 gezeigt, zumindest abschnittsweise entlang eines Ellipsenteilstückes verlaufend ausgeführt sein. In der Höhe hi des Steges 6 weist der laufstreifenaußenseitige Rillenabschnitt 1a, im Querschnitt betrachtet, in axialer Richtung eine Breite bₐ (Fig. 3) von 30% bis 50% der Breite Bi der schulterseitigen Umfangsrille 1 auf.

Der laufstreifeninnenseitige Rillenabschnitt 1b ist durch die seitliche Flanke 6b des Steges 6, dem dieser gegenüberliegenden radial inneren Abschnitt der laufstreifeninnenseitigen Rillenflanke 5b sowie durch einen im Querschnitt insbesondere gerundeten, ebenfalls in der bereits erwähnten Tiefe T₁ befindlichen Rillengrund 8b begrenzt. In der Höhe hi des Steges 6 weist der laufstreifeninnenseitige Rillenabschnitt 1b, im Querschnitt betrachtet, in axialer Richtung eine Breite b_{b} (Fig. 3) von 10% bis 30% der Breite Bi der schulterseitigen Umfangsrille 1 auf.

Die Breite bₐ des laufstreifenaußenseitigen Rillenabschnittes 1a und die Breite b_{b} des laufstreifeninnenseitigen Rillenabschnittes 1b sind bevorzugter Weise derart gewählt, dass sie gemeinsam 40% bis 70% der in der Höhe hi des Steges 6 in axialer Richtung ermittelten Breite der Umfangsrille 1 einnehmen.

Wie Fig. 4 zeigt, ist die Aussparung 7 in radialer Richtung durch einen parallel zur Laufstreifenperipherie ausgerichteten Boden 7a sowie in Umfangsrichtung zum Steg 6 durch in radialer Richtung verlaufende Stirnflächen 7b begrenzt. Die Aussparung 7 weist zwischen den Stirnflächen 7b in Umfangsrichtung eine Erstreckungslänge l₁ von 5,0 mm bis 25,0 mm auf. Zwischen dem Boden 7a und den Stirnflächen 7b ist jeweils eine Übergangsrundung 7c ausgebildet, welche, im Querschnitt betrachtet, entlang eines Radius r₁ von 0,5 mm bis 4,0 mm gerundet ist, sodass der Boden 7a knickfrei in die jeweilige Stirnfläche 7b übergeht.

Wie in Fig. 3 angedeutet ist, ist neben der Aussparung 7 im laufstreifeninnenseitigen Rillenabschnitt 1b eine die Tiefe im laufstreifeninnenseitigen Rillenabschnitt 1b lokal verringernde, sich in Umfangsrichtung über die Aussparung 7 hinauserstreckende (Fig. 2, Fig. 4) Erhebung 9 ausgebildet, welche in radialer Richtung neben der Aussparung 7 niveaugleich mit dem Boden 7a der Aussparung 7 verläuft, sodass sich der Boden 7a in der Oberfläche der Erhebung 9 fortsetzt. Zwischen der Oberfläche der Erhebung 9 und der laufstreifeninnenseitigen Rillenflanke 5b ist eine Übergangsrundung 7d ausgebildet, welche, im Querschnitt betrachtet, entlang eines Radius r₂ von 0,5 mm bis 2,0 mm gerundet ist sowie knickfrei zum Boden 7a und knickfrei zur laufstreifeninnenseitigen Rillenflanke 5b und zum Steg 6 verläuft.

Der Boden 7a und dessen Fortsetzung in der Oberfläche der Erhebung 9 befinden sich gegenüber der Tiefe T₁ in radialer Richtung auf einer Höhe h₂ (Fig. 3, Fig. 4), welche 1,5 mm bis 5,0 mm beträgt. Der Boden 7a der Aussparung 7 und die Erhebung 9 dienen als Abriebindikator und befinden sich daher vorzugsweise auf einem der jeweils geltenden Mindestprofiltiefe des jeweiligen Nutzfahrzeugreifentyps entsprechenden Niveau.

Wie Fig. 2 in Verbindung mit Fig. 4 zeigt, läuft die Erhebung 9 im laufstreifeninnenseitigen Rillenabschnitt 1b außerhalb der Aussparung 7 neben dem Steg 6 in der Tiefe T₁ aus, wobei die Erhebung 9, im in Umfangsrichtung vorliegenden Längsschnitt betrachtet (Fig. 4), an jeder Seite über eine an die Oberfläche der Erhebung 9 knickfrei anschließende Übergangsrundung 9a, einen beispielsweise um 15° zur radialen Richtung geneigten mittleren Abschnitt 9b und eine knickfrei zum Rillengrund 8b des laufstreifeninnenseitigen Rillenabschnittes 1b verlaufende Übergangsrundung 9c ausläuft. In Umfangsrichtung weist die Erhebung 9 eine Erstreckungslänge l₂ (Fig. 4) von höchstens 60,0 mm auf. Die zwischen der Oberfläche der Erhebung 9 und der laufstreifeninnenseitigen Rillenflanke 5b ausgebildete Übergangsrundung 7d (Fig. 3) ist bevorzugter Weise über die gesamte Umfangserstreckung der Erhebung 9, d.h. auch im Bereich der Übergangsrundung 9a, des geneigten mittleren Abschnitt 9b und der Übergangsrundung 9c, fortgeführt.

Die Erfindung ist auf die beschriebene und dargestellte Ausführungsvariante nicht beschränkt. Insbesondere können die Aussparungen, welche in dem in der einen schulterseitigen Umfangsrille befindlichen Steg ausgebildet sind, zu den Aussparungen, welche in dem in der anderen schulterseitigen Umfangsrille befindlichen Steg ausgebildet sind, in Umfangsrichtung zueinander versetzt sein. Ferner können die entlang des laufstreifenaußenseitigen Rillenabschnittes und/oder entlang des laufstreifeninnenseitigen Rillenabschnitt verlaufenden Stegkanten zumindest abschnittsweise mit einer Fase - d.h. einer zur radialen Richtung insbesondere um 30° bis 60° geneigten Schrägfläche - versehen sein.

### Bezugsziffernliste

- 1: schulterseitige Umfangsrille
- 1a: laufstreifenaußenseitiger Rillenabschnitt
- 1b: laufstreifeninnenseitiger Rillenabschnitt
- 2: mittlere Umfangsrille
- 3: schulterseitige Profilrippe
- 4: mittlere Profilrippe
- 5a: laufstreifenaußenseitige Rillenflanke
- 5b: laufstreifeninnenseitige Rillenflanke
- 6: Steg
- 6a, 6b: seitliche Flanke
- 6c: Deckfläche
- 7: Aussparung
- 7a: Boden
- 7b: Stirnfläche
- 7c, 7d: Übergangsrundung
- 8a, 8b: Rillengrund
- 9: Erhebung
- 9a: Übergangsrundung
- 9b: mittlerer Abschnitt
- 9c: Übergangsrundung
- B₁: Breite
- bₐ, b_{b}: Breite
- h₁, h₂: Höhe
- l₁, l₂: Erstreckungslänge
- r₁, r₂: Radius
- T₁: Tiefe

## Patentansprüche

1. Nutzfahrzeugreifen mit einem Laufstreifen mit je einer schulterseitigen Umfangsrille (1) bei jeder Schulter, wobei jede schulterseitige Umfangsrille (1) eine laufstreifeninnenseitige Rillenflanke (5b) und eine laufstreifenaußenseitige Rillenflanke (5a) aufweist und wobei in jeder schulterseitigen Umfangsrille (1) ein sich über den Laufstreifenumfang erstreckender, freistehender Steg (6) ausgebildet ist, welcher die schulterseitige Umfangsrille (1) in einen laufstreifenaußenseitigen Rillenabschnitt (1a) und einen laufstreifeninnenseitigen Rillenabschnitt (1b) teilt, wobei der in jeder schulterseitigen Umfangsrille (1) ausgebildete, freistehende Steg (6) mit einer Anzahl von insbesondere gleichmäßig über den Umfang verteilten, den Steg (6) in axialer Richtung durchsetzenden Aussparungen (7) versehen ist, **dadurch gekennzeichnet,**
**dass** jede Aussparung (7) in radialer Richtung durch einen Boden (7a) begrenzt ist, welcher sich in der Oberfläche einer Erhebung (9) fortsetzt, die neben der Aussparung (7) im laufstreifeninnenseitigen Rillenabschnitt (1b) ausgebildet ist, wobei die Erhebung (9) in Verbindung mit dem Boden (7a) der Aussparung (7) einen Abriebindikator bildet, wobei der laufstreifenaußenseitige Rillenabschnitt (1a) breiter ist als laufstreifeninnenseitige Rillenabschnitt (1b).

2. Nutzfahrzeugreifen nach Anspruch 1, **dadurch gekennzeichnet, dass** der Boden (7a) der Aussparung (7) parallel zur Laufstreifenperipherie verläuft, wobei seitlich der Aussparung (7) die Oberfläche der Erhebung (9) niveaugleich mit dem Boden (7a) der Aussparung (7) verläuft.

3. Nutzfahrzeugreifen nach Anspruch 1 oder 2, **dadurch gekennzeichnet, dass** die Erhebung (9), welche im laufstreifeninnenseitigen Rillenabschnitt (1b) ausgebildet ist, in Umfangsrichtung außerhalb der Aussparung (7) bis auf die Tiefe (T₁) des laufstreifeninnenseitigen Rillenabschnittes (1b) ausläuft.

4. Nutzfahrzeugreifen nach einem der Ansprüche 1 bis 3, **dadurch gekennzeichnet, dass** die Erhebung (9), im in Umfangsrichtung vorliegenden Längsschnitt betrachtet, beidseitig jeweils über eine an die Oberfläche der Erhebung (9) knickfrei anschließende Übergangsrundung (9a), einen insbesondere um 10° bis 25° zur radialen Richtung geneigten mittleren Abschnitt (9b) und eine knickfrei zum Rillengrund (8b) des laufstreifeninnenseitigen Rillenabschnittes (1b) verlaufende Übergangsrundung (9c) in der Tiefe (T₁) des laufstreifeninnenseitigen Rillenabschnittes (1b) ausläuft.

5. Nutzfahrzeugreifen nach einem der Ansprüche 1 bis 4, **dadurch gekennzeichnet, dass** zwischen der Oberfläche der Erhebung (9) und der laufstreifeninnenseitigen Rillenflanke (5b) eine Übergangsrundung (7d) ausgebildet ist, welche, im Querschnitt betrachtet, entlang eines Radius (r₂) von 0,5 mm bis 2,0 mm sowie knickfrei zum Boden (7a) der Aussparung (7) und knickfrei zur laufstreifeninnenseitigen Rillenflanke (5b) und zum Steg (6) verläuft.

6. Nutzfahrzeugreifen nach Anspruch 5, **dadurch gekennzeichnet, dass** die zwischen der Oberfläche der Erhebung (9) und der laufstreifeninnenseitigen Rillenflanke (5b) ausgebildete Übergangsrundung (7d) über die gesamte Umfangserstreckung der Erhebung (9) fortgeführt ist.

7. Nutzfahrzeugreifen nach einem der Ansprüche 1 bis 6, **dadurch gekennzeichnet, dass** zwischen dem Boden (7a) der Aussparung (7) und Stirnflächen (7b), welche die Aussparung (7) in Umfangsrichtung begrenzen, jeweils eine Übergangsrundung (7c) ausgebildet ist, welche, im Querschnitt betrachtet, entlang eines Radius (r₁) von 0,5 mm bis 4,0 mm sowie knickfrei zum Boden (7a) der Aussparung (7) und knickfrei zur jeweiligen Stirnfläche (7b) der Aussparung (7) verläuft.

8. Nutzfahrzeugreifen nach einem der Ansprüche 1 bis 7, **dadurch gekennzeichnet, dass** sich der Boden (7a) der Aussparung (7) gegenüber der tiefsten Stelle des Rillengrundes der Rillenabschnitte (1a, 1b) in radialer Richtung in einer Höhe (h₂) von 1,5 mm bis 5,0 mm befindet.

9. Nutzfahrzeugreifen nach einem der Ansprüche 1 bis 8, **dadurch gekennzeichnet, dass** die Aussparung (7) in Umfangsrichtung an ihrer längsten Stelle eine Erstreckungslänge (l₁) von 5,0 mm bis 25,0 mm aufweist.

10. Nutzfahrzeugreifen nach einem der Ansprüche 1 bis 9, **dadurch gekennzeichnet, dass** die Erhebung (9), welche im laufstreifeninnenseitigen Rillenabschnitt (1b) ausgebildet ist, in Umfangsrichtung eine Erstreckungslänge (l₂) von höchstens 60,0 mm aufweist.

11. Nutzfahrzeugreifen nach einem der Ansprüche 1 bis 10, **dadurch gekennzeichnet, dass** der laufstreifenaußenseitige Rillenabschnitt (1a) am radial äußeren Ende des Steges (6) eine Breite (bₐ) von 30% bis 50% der Breite (B₁) der schulterseitigen Umfangsrille (1) aufweist und dass der laufstreifeninnenseitige Rillenabschnitt (1b) am radial äußeren Ende des Steges (6) eine Breite (bb) von 10% bis 30% der Breite (B₁) der schulterseitigen Umfangsrille (1) aufweist, wobei die Breite (B₁) der schulterseitigen Umfangsrille (1) in axialer Richtung an der Laufstreifenperipherie ermittelt wird.

12. Nutzfahrzeugreifen nach einem der Ansprüche 1 bis 11, **dadurch gekennzeichnet, dass** der laufstreifenaußenseitige Rillenabschnitt (1a) und der laufstreifeninnenseitige Rillenabschnitt (1b) am radial äußeren Ende des Steges (6) gemeinsam 40% bis 70% der am radial äußeren Ende des Steges in axialer Richtung gemessen Breite der schulterseitigen Umfangsrille (1) einnehmen.

13. Nutzfahrzeugreifen nach einem der Ansprüche 1 bis 12, **dadurch gekennzeichnet, dass** die Breite (B₁) der schulterseitigen Umfangsrille (1), ermittelt in axialer Richtung an der Laufstreifenperipherie, 12,0 mm bis 20,0 mm beträgt.

14. Nutzfahrzeugreifen nach einem der Ansprüche 1 bis 13, **dadurch gekennzeichnet, dass** sich die Aussparungen (7), die im Steg (6) in der einen schulterseitigen Umfangsrille (1) ausgebildet sind, zu den Aussparungen (7), die im Steg (6) in der anderen schulterseitigen Umfangsrille (1) ausgebildet sind, in axialer Richtung in übereinstimmenden Positionen befinden.

15. Nutzfahrzeugreifen nach einem der Ansprüche 1 bis 14, **dadurch gekennzeichnet, dass** der Steg (6) entlang seiner beim laufstreifenaußenseitigen Rillenabschnitt (1a) und/oder entlang seiner beim laufstreifeninnenseitigen Rillenabschnitt (1b) verlaufenden Kante zumindest abschnittsweise mit einer Fase versehen ist.

## Claims

1. Commercial vehicle tyre comprising a tread with a respective shoulder-side circumferential groove (1) at each shoulder, each shoulder-side circumferential groove (1) having a tread inner-side groove flank (5b) and a tread outer-side groove flank (5a), and a freestanding web (6) that extends over the circumference of the tread being formed in each shoulder-side circumferential groove (1) and dividing the shoulder-side circumferential groove (1) into a tread outer-side groove portion (1a) and a tread inner-side groove portion (1b), the freestanding web (6) that is formed in each shoulder-side circumferential groove (1) being provided with a number of cutouts (7), which are in particular evenly distributed over the circumference and pass through the web (6) in the axial direction,
**characterized**
**in that** each cutout (7) is delimited in the radial direction by a bottom (7a) which continues in the surface of an elevation (9) that is formed alongside the cutout (7) in the tread inner-side groove portion (1b), the elevation (9) together with the bottom (7a) of the cutout (7) forming a wear indicator, the tread outer-side groove portion (1a) being wider than the tread inner-side groove portion (1b).

2. Commercial vehicle tyre according to Claim 1, **characterized in that** the bottom (7a) of the cutout (7) runs parallel to the periphery of the tread, the surface of the elevation (9) to the sides of the cutout (7) running at the same level as the bottom (7a) of the cutout (7).

3. Commercial vehicle tyre according to Claim 1 or 2, **characterized in that** the elevation (9) that is formed in the tread inner-side groove portion (1b) runs out in the circumferential direction outside the cutout (7) to the depth (T₁) of the tread inner-side groove portion (1b).

4. Commercial vehicle tyre according to one of Claims 1 to 3, **characterized in that**, when considered in longitudinal section in the circumferential direction, the elevation (9) runs out on each of both sides over a transitional rounding (9a), adjoining the surface of the elevation (9) without any kinks, a middle portion (9b), inclined in particular by 10° to 25° to the radial direction, and a transitional rounding (9c), running without any kinks to the groove base (8b) of the tread inner-side groove portion (1b), at the depth (T₁) of the tread inner-side groove portion (1b).

5. Commercial vehicle according to one of Claims 1 to 4, **characterized in that** between the surface of the elevation (9) and the tread inner-side groove flank (5b) there is formed a transitional rounding (7d) which, when considered in cross section, runs along a radius (r₂) of 0.5 mm to 2.0 mm and without any kinks to the bottom (7a) of the cutout (7) and without any kinks to the tread inner-side groove flank (5b) and to the web (6).

6. Commercial vehicle tyre according to Claim 5, **characterized in that** the transitional rounding (7d) formed between the surface of the elevation (9) and the tread inner-side groove flank (5b) is continued over the entire circumferential extent of the elevation (9).

7. Commercial vehicle tyre according to one of Claims 1 to 6, **characterized in that** between the bottom (7a) of the cutout (7) and end faces (7b) that delimit the cutout (7) in the circumferential direction there is respectively formed a transitional rounding (7c) which, when considered in cross section, runs along a radius (r₁) of 0.5 mm to 4.0 mm and without any kinks to the bottom (7a) of the cutout (7) and without any kinks to the respective end face (7b) of the cutout (7).

8. Commercial vehicle tyre according to one of Claims 1 to 7, **characterized in that** the bottom (7a) of the cutout (7) is at a height (h₂) of 1.5 mm to 5.0 mm with respect to the deepest point of the groove base of the groove portions (1a, 1b) in the radial direction.

9. Commercial vehicle tyre according to one of Claims 1 to 8, **characterized in that** the cutout (7) has at its longest point in the circumferential direction a length of extent (l₁) of 5.0 mm to 25.0 mm.

10. Commercial vehicle tyre according to one of Claims 1 to 9, **characterized in that** the elevation (9) that is formed in the tread inner-side groove portion (1b) has in the circumferential direction a length of extent (l₂) of at most 60.0 mm.

11. Commercial vehicle tyre according to one of Claims 1 to 10, **characterized in that** the tread outer-side groove portion (1a) has at the radially outer end of the web (6) a width (bₐ) of 30% to 50% of the width (B₁) of the shoulder-side circumferential groove (1) and **in that** the tread inner-side groove portion (1b) has at the radially outer end of the web (6) a width (b_{b}) of 10% to 30% of the width (B₁) of the shoulder-side circumferential groove (1), the width (B₁) of the shoulder-side circumferential groove (1) being determined at the periphery of the tread in the axial direction.

12. Commercial vehicle tyre according to one of Claims 1 to 11, **characterized in that** the tread outer-side groove portion (1a) and the tread inner-side groove portion (1b) at the radially outer end of the web (6) together make up 40% to 70% of the width of the shoulder-side circumferential groove (1) measured at the radially outer end of the web in the axial direction.

13. Commercial vehicle tyre according to one of Claims 1 to 12, **characterized in that** the width (B₁) of the shoulder-side circumferential groove (1), determined at the periphery of the tread in the axial direction, is 12.0 mm to 20.0 mm.

14. Commercial vehicle tyre according to one of Claims 1 to 13, **characterized in that** the cutouts (7) that are formed in the web (6) in one shoulder-side circumferential groove (1) are located in relation to the cutouts (7) that are formed in the web (6) in the other shoulder-side circumferential groove (1) at coinciding positions in the axial direction.

15. Commercial vehicle tyre according to one of Claims 1 to 14, **characterized in that** the web (6) is provided at least in certain portions with a bevel along its edge running at the tread outer-side groove portion (1a) and/or along its edge running at the tread inner-side groove portion (1b).

## Revendications

1. Pneumatique de véhicule utilitaire, le pneumatique comprenant une bande de roulement pourvue d'une rainure circonférentielle (1) côté épaulement pour chaque épaulement, chaque rainure circonférentielle (1) du côté épaulement comportant un flanc de rainure (5b) du côté intérieur de la bande de roulement et un flanc de rainure (5a) du côté extérieur de la bande de roulement, et une nervure libre (6) qui s'étend sur la circonférence de la bande de roulement étant formée dans chaque rainure circonférentielle (1) du côté épaulement et divisant la rainure circonférentielle (1) du côté épaulement en une portion de rainure (1a) du côté extérieur de la bande de roulement et une portion de rainure (1b) du côté intérieur de la bande de roulement, la nervure libre (6) formée dans chaque rainure circonférentielle (1) du côté épaulement étant pourvue d'un certain nombre d'évidements (7) qui sont répartis, notamment régulièrement, sur la circonférence et qui sont ménagés à travers la nervure (6) dans la direction axiale,
**caractérisé en ce que**,
chaque évidement (7) est délimité dans une direction radiale par un fond (7a) qui se prolonge dans la surface d'une élévation (9) qui est formée à côté de l'évidement (7) dans la portion de rainure (1b) du côté intérieur de la bande de roulement, l'élévation (9) formant en liaison avec le fond (7a) de l'évidement (7) un indicateur d'usure, la portion de rainure (1a) du côté extérieur de la bande de roulement étant plus large que la portion de rainure (1b) du côté intérieur de la bande de roulement.

2. Pneumatique de véhicule utilitaire selon la revendication 1, **caractérisé en ce que** le fond (7a) de l'évidement (7) s'étend parallèlement à la périphérie de la bande de roulement, la surface de l'élévation (9) s'étendant, latéralement à l'évidement (7), au même niveau que le fond (7a) de l'évidement (7).

3. Pneumatique de véhicule utilitaire selon la revendication 1 ou 2, **caractérisé en ce que** l'élévation (9), qui est formée dans la portion de rainure (1b) du côté intérieur de la bande de roulement, s'étend dans la direction circonférentielle à l'extérieur de l'évidement (7) jusqu'à la profondeur (T₁) de la portion de rainure (1b) du côté intérieur de la bande de roulement.

4. Pneumatique de véhicule utilitaire selon l'une des revendications 1 à 3, **caractérisé en ce que** l'élévation (9), vue dans la coupe longitudinale effectuée dans la direction circonférentielle, s'étend dans la profondeur (T₁) de la portion de rainure (1b) du côté intérieur de la bande de roulement des deux côtés à chaque fois par le biais d'un arrondi de transition (9a) jouxtant sans pli la surface de l'élévation (9), d'une portion médiane (9b) inclinée en particulier de 10° à 25° par rapport à la direction radiale et d'un arrondi de transition (9c) qui s'étend sans pli vers le fond de rainure (8b) de la portion de rainure (1b) du côté intérieur de la bande de roulement.

5. Pneumatique de véhicule utilitaire selon l'une des revendications 1 à 4, **caractérisé en ce qu'**un arrondi de transition (7d) est formé entre la surface de l'élévation (9) et le flanc de rainure (5b) du côté intérieur de la bande de roulement et s'étend, vu en coupe transversale, le long d'un rayon (r₂) de 0,5 mm à 2,0 mm et sans pli vers le fond (7a) de l'évidement (7) et sans pli vers le flanc de rainure (5b) du côté intérieur de la bande de roulement et vers la nervure (6) .

6. Pneumatique de véhicule utilitaire selon la revendication 5, **caractérisé en ce que** l'arrondi de transition (7d) formé entre la surface de l'élévation (9) et le flanc de rainure (5b) du côté intérieur de la bande de roulement se poursuit sur toute l'étendue circonférentielle de l'élévation (9).

7. Pneumatique de véhicule utilitaire selon l'une des revendications 1 à 6, **caractérisé en ce qu'**un arrondi de transition (7c) est formé entre le fond (7a) de l'évidement (7) et chacune des faces frontales (7b), qui délimitent l'évidement (7) dans la direction circonférentielle, et s'étend, vu en coupe transversale, le long d'un rayon (r₂) de 0,5 mm à 4,0 mm et sans pli jusqu'au fond (7a) de l'évidement (7) et sans pli jusqu'à la face frontale respective (7b) de l'évidement (7).

8. Pneumatique de véhicule utilitaire selon l'une des revendications 1 à 7, **caractérisé en ce que** le fond (7a) de l'évidement (7) est opposé au point le plus profond du fond de rainure des portions de rainure (1a, 1b) dans une direction radiale à une hauteur (h₂) de 1,5 mm à 5,0 mm.

9. Pneumatique de véhicule utilitaire selon l'une des revendications 1 à 8, **caractérisé en ce que** l'évidement (7) a, en son point le plus long, une longueur d'extension (l₁) de 5,0 mm à 25,0 mm dans la direction circonférentielle.

10. Pneumatique de véhicule utilitaire selon l'une des revendications 1 à 9, **caractérisé en ce que** l'élévation (9), qui est formée dans la portion de rainure (1b) du côté intérieur de la bande de roulement, a une longueur d'extension (l₂) d'au plus 60,0 mm dans la direction circonférentielle.

11. Pneumatique de véhicule utilitaire selon l'une des revendications 1 à 10, **caractérisé en ce que** la portion de rainure (1a) du côté extérieur de la bande de roulement a, à l'extrémité radialement extérieure de la nervure (6), une largeur (bₐ) valant 30 % à 50 % de la largeur (B₁) de la rainure circonférentielle (1) du côté épaulement et **en ce que** la portion de rainure (1b) du côté intérieur de la bande de roulement a, à l'extrémité radialement extérieure de la nervure (6), une largeur (b_{b}) valant 10 % à 30 % de la largeur (B₁) de la rainure circonférentielle (1) du côté épaulement, la largeur (B₁) de la rainure circonférentielle (1) du côté épaulement étant déterminée dans la direction axiale à la périphérie de la bande de roulement.

12. Pneumatique de véhicule utilitaire selon l'une des revendications 1 à 11, **caractérisé en ce que** la portion de rainure (1a) du côté extérieur de la bande de roulement et la portion de rainure (1b) du côté intérieur de la bande de roulement occupent conjointement, à l'extrémité radialement extérieure de la nervure (6), 40 % à 70 % de la largeur de la rainure circonférentielle (1) du côté épaulement qui est mesurée dans la direction axiale.

13. Pneumatique de véhicule utilitaire selon l'une des revendications 1 à 12, **caractérisé en ce que** la largeur (B₁) de la rainure circonférentielle (1) du côté épaulement, déterminée dans une direction axiale à la périphérie de la bande de roulement, est de 12,0 mm à 20,0 mm.

14. Pneumatique de véhicule utilitaire selon l'une des revendications 1 à 13, **caractérisé en ce que** les évidements (7), qui sont ménagés dans la nervure (6) de l'une des rainures circonférentielles (1) du côté épaulement, sont situés dans des positions correspondantes dans la direction axiale par rapport aux évidements (7) qui sont ménagés dans la nervure (6) de l'autre rainure circonférentielle (1) du côté épaulement.

15. Pneumatique de véhicule utilitaire selon l'une des revendications 1 à 14, **caractérisé en ce que** la nervure (6) est au moins par endroits pourvue d'un biseau le long de son bord qui s'étend près de la portion de rainure (1a) du côté extérieur de la bande de roulement et/ou le long de son bord qui s'étend près de la portion de rainure (1b) du côté intérieur de la bande de roulement.
